# EUROPEAN PATENT SPECIFICATION

(11) **EP 4 570 526 B1**
(45) Date of publication and mention of the grant of the patent: **13.05.2026**
(21) Application number: 24218039.6
(22) Date of filing: 06.12.2024
(51) Int. Cl.: B60C 11/11, B60C 11/03

(54) **PNEUMATIC TIRE**
LUFTREIFEN
PNEUMATIQUE

(30) Priority: 15.12.2023 JP 2023212118
(43) Date of publication of application: 18.06.2025
(73) Proprietor: Toyo Tire Corporation, Itami-shi, Hyogo 664-0847 (JP)
(72) Inventor: MATSUBARA, Keisuke, Itami-shi, Hyogo 664-0847 (JP)
(74) Representative: Müller-Boré & Partner Patentanwälte PartG mbB

(56) References cited:
- JP-A- 2003 054 222
- JP-A- 2008 265 501
- US-A1- 2021 039 445

## Description

### TECHNICAL FIELD

The present invention relates to a pneumatic tire.

### BACKGROUND

A pneumatic tire having a tread is disclosed in JP 2019-199206 A ('206 patent) in which the tread has a pair of shoulder main grooves continuously extending in a tire circumferential direction, a pair of crown main grooves continuously extending in the tire circumferential direction at positions located, in a tire axial direction, inward of the shoulder main grooves, and a middle land disposed between the crown main groove and the shoulder main groove. The '206 patent further discloses that the middle land includes a first middle block with a tread surface area of S1 and a second middle block with a tread surface area of S2, and a ratio of S1 / S2 is greater than or equal to 0.9 and less than or equal to 1.1.

In recent years, there has been a demand for suppression of uneven wear and chipping of pneumatic tires during driving. In particular, suppression of uneven wear and chipping during driving is strongly demanded of off-road tires which are expected to run on irregular ground and thus receive great input force from road surfaces.

JP 2003 054222 A describes a pneumatic tire that suppress eccentric wear between blocks while a pitch length of a block in the peripheral direction is changed.

JP 2008 265501 A describes a pneumatic tire secured in lateral grip performance and improved in riding performance especially in a super low µ road surface, while exhibiting excellent traction performance.

US 2021 039445 A1 describes a pneumatic tire that will make it possible to suppress occurrence of variation in rigidity at blocks.

### SUMMARY

The present invention is defined by the independent claim. Preferred examples are defined in the dependent claims.

In the pneumatic timer according to this invention, both uneven wear and chipping during driving can be suppressed.

### BRIEF DESCRIPTION OF DRAWINGS

FIG. 1 shows half of a cross sectional view of a pneumatic tire according to an example embodiment;
FIG. 2 is a plan view showing a tread of the pneumatic tire according to the example embodiment;
FIG. 3 is a plan view showing a tread of a pneumatic tire according to Experiment Example 2; and
FIG. 4 is a diagram showing longitudinal stiffness of each block that is calculated through a simulation.

### DESCRIPTION OF EMBODIMENTS

Hereinafter, an example embodiment of a pneumatic tire according to this disclosure will be explained in detail with reference to the drawings. The embodiment described below is merely presented by way of illustration.

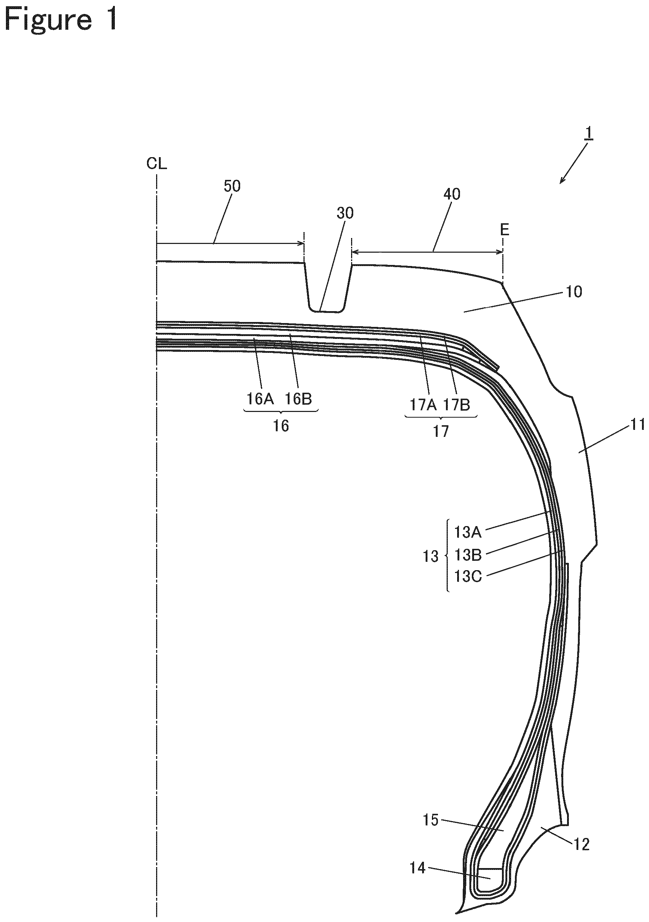

FIG. 1 shows half of a cross sectional view of a pneumatic tire 1 according to an example embodiment and illustrates an internal structure of the tire 1. As shown in FIG. 1, the pneumatic timer 1 includes a tread 10 which is a part that is brought into contact with the road surface, a pair of side walls 11 disposed on both sides of the tread 10, and a pair of beads 12 disposed inward of the side walls 11 in a tire radial direction. In addition, the pneumatic tire 1 further includes a carcass 13 configured to bridge between the pair of beads 12. The pneumatic tire 1 is designed to be adapted to off road use.

The tread 10 includes a pair of shoulder main grooves 30 continuously extending in a tire circumferential direction. The tread 10 further includes both a pair of shoulder regions 40 which are respectively disposed outward of the shoulder main grooves 30 in a tire axial direction and delimited by a pair of ground contact edges E, and a center region 50 disposed between the pair of shoulder main grooves 30.

As used herein, the ground contact edges E are defined as both ends, in the tire axial direction, of a region that is brought into contact with a flat road surface when a normal load is applied to an unused pneumatic tire 1 mounted on a normal rim and filled with air to a normal internal pressure.

Here, the "normal rim" is a rim designated by tire standards, and is a "standard rim" according to JATMA and a "measuring rim" according to TRA and ETRTO. The "normal internal pressure" is the "maximum air pressure" according to JATMA, the maximum value shown in the table "TIRE LOAD LIMITS AT VARIOUS COLD INFLATION PRESSURES" according to TRA, and the "inflation pressure" according to ETRTO. The "normal load" is the "maximum load performance" according to JATMA, the maximum value shown in the table "TIRE LOAD LIMITS AT VARIOUS COLD INFLATION PRESSURES" according to TRA, and the "LOAD CAPACITY" according to ETRTO.

As will be explained in detail below, a plurality of blocks having various shapes that differ from each other are arranged in the shoulder region 40 and the center region 50 of the tread 10. In a top view of the tread 10, an area of a largest block having the maximum area among areas of the blocks disposed in the center region 50 and the shoulder region 40 is less than or equal to 1.4 times of an area of a smallest block having the minimum area. When the area of the largest block is defined to be less than or equal to 1.4 times of the area of the smallest block, differences in block stiffness among the blocks can be reduced, and uneven wear and chipping during driving can be suppressed accordingly. Here, each of the blocks is a protrusion isolated by main grooves and lateral grooves and designed to protrude outward in the tire radial direction. That is, the blocks do not include a region isolated by sipes. As used herein, a groove having a width less than 1.5 mm is defined as a sipe. In other words, the block is the protrusion that is isolated by grooves having a width greater than or equal to 1.5 mm and protrudes outward in the tire radial direction.

The side walls 11 are disposed on both sides of the tread 10 and annularly formed along the tire circumferential direction. The side walls 11 protrude to the outermost position in the tire axial direction of the pneumatic tire 1, and gradually curved so as to protrude outward in the tire axial direction. The side walls 11 have a function of protecting the carcass 13 against damage.

The bead 12 is arranged on an inner side of the side wall 11 in the tire radial direction and is fixed to a rim of a wheel. The bead 12 includes a bead core 14 and a bead filler 15. The bead core 14 is an annular member composed of a steel bead wire and extending over the entire circumference in a tire circumferential direction, and is embedded in the bead 12. The bead filler 15 is an annular hard rubber member formed in a tapered shape extending outward in the tire radial direction while becoming narrower, and the bead filler 15 extends over the entire circumference of the pneumatic tire 1.

The carcass 13 is looped between the pair of beads 12 and is turned back around the bead core 14 for fixation. The carcass 13 is composed of at least one carcass ply. The carcass ply is formed by covering a carcass cord composed of organic fibers with a coating rubber. The carcass cord is placed substantially at a right angle (greater than or equal to 80° and less than or equal to 90°, for example) relative to the tire circumferential direction. The organic fibers used for the carcass cord may include, for example, polyester fibers, rayon fibers, aramid fibers, and nylon fibers.

In this embodiment, the carcass 13 is composed of three carcass plies 13A, 13B, and 13C. When the carcass 13 is composed of three or more carcass plies 13A, 13B, 13C, durability of the pneumatic tire 1 can be improved. It should be noted that the number of carcass plies is not limited to three or more, and one or two carcass plies may be used.

The pneumatic tire 1 further includes a belt layer 16 disposed on an outer circumference of a crown of the carcass 13 and a belt reinforcement layer 17 disposed on an outer circumference of the belt layer 16. That is, the belt layer 16 is placed between the carcass 13 and the tread 10, and the belt reinforcement layer 17 is placed between the belt layer 16 and the tread 10.

The belt layer 16 is composed of two belt plies 16A and 16B. Stiffness of the tread 10 can be easily improved by forming the belt layer 16 using the two belt plies 16A and 16B. The number of belt plies is not limited to two, and the belt layer 16 may include one, or three or more belt plies.

The belt plies 16A and 16B are formed by covering rubber on cords arranged in a direction that is inclined with respect to the tire circumferential direction. The material of the cords for the belt plies 16A and 16B is not specifically limited, and may include organic fibers, such as polyester, rayon, nylon, and aramid fibers or a metal, such as steel, for example.

The belt ply 16A is placed on an inner side of the belt ply 16B in the tire radial direction. In addition, a length of the belt ply 16A in the tire axial direction is greater than a length of the belt play 16B in the tire axial direction. This means that the end of the belt ply 16A is located further outward in the tire axial direction than the end of the belt ply 16B.

The belt reinforcement layer 17 is composed of two belt reinforcement plies 17A and 17B. When the belt reinforcement layer 17 is composed of the two belt reinforcement plies 17A and 17B, a binding force of the belt layer 17 is increased, which facilitates improving durability of the pneumatic tire 1. The number of belt reinforcement plies is not limited to two, and one or three or more belt reinforcement plies may be used. The belt reinforcement ply 17A, 17B may be formed as a cap ply which covers the entire width of the belt layer 16, or an edge ply which covers only both ends of the belt layer 16 in the tire axial direction.

The belt reinforcement ply 17A, 17B is composed of organic fiber codes which are aligned with each other in the length direction and continuously wound in a helical shape with respect to the tire circumferential direction. Organic fibers used for the belt reinforcement ply 17A, 17B may include, for example, aramid fibers, polyester fibers, nylon fibers, and composite fibers composed of a combination of those fibers.

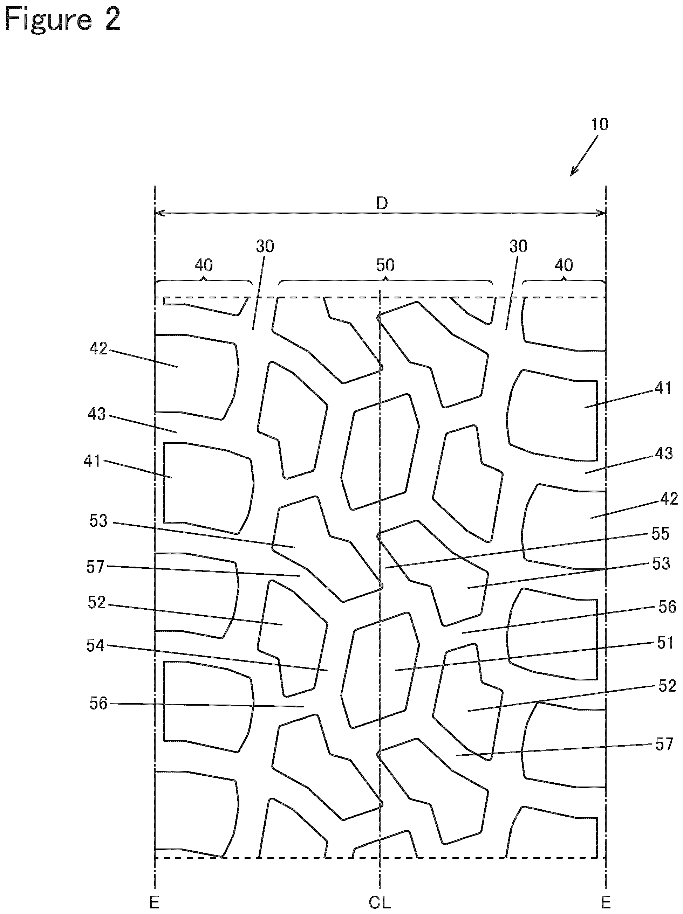

Hereinafter, a tread pattern of the pneumatic tire 1 will be described in detail with reference to FIG. 2. FIG. 2 is a plan view of the pneumatic tire 1 (tread 10).

As shown in FIG. 2, the tread 10 has a point symmetric pattern which is symmetric with respect to an arbitrary point on the equator CL. As used herein, the equator CL is an imaginary line passing through the center in the tire axial direction of the tread 10 and extending along the tire circumferential direction.

The tread 10 has the pair of shoulder main grooves 30 continuously extending in the tire circumferential direction. The shoulder main grooves 30 have a zigzag shape extending in the tire circumferential direction. Alternatively, the shoulder main grooves 30 may extend linearly along the tire circumferential direction.

A groove width of the shoulder main groove 30 is preferably greater than or equal to 3% of a ground contact width D, and more preferably greater than or equal to 5% of the ground contact width D. Drainage performance can be improved when the shoulder main groove 30 is defined to have the groove width greater than or equal to 3% of the ground contact width D. The upper limit of the groove width of the shoulder main groove 30 is, for example, 10% of the ground contact width D. Accordingly, the groove width of the shoulder main groove 30 is preferably greater than or equal to 3% and less than or equal to 10% of the ground contact width D, and more preferably greater than or equal to 5% and less than or equal to 10% of the ground contact width D. As used herein, a groove width denotes a width of the groove in a profile plane along a ground contact surface of the tread 10 unless otherwise specified.

A depth of the shoulder main groove 30 is not specifically limited to any depth, and may be, for example, greater than or equal to 8.0 mm and less than or equal to 20.0 mm. As used herein, a groove depth denotes a length of the groove in the tire radial direction from the profile plane along the ground contact surface of the tread 10 to the bottom of the groove.

The tread 10 includes the pair of shoulder regions 40 disposed outward of the pair of shoulder main grooves 30 in the tire axial direction and delimited by the ground contact edges E, and further includes the center region 50 disposed between the pair of shoulder main grooves 30. A length of the center region 50 in the tire axial direction is, for example, greater than or equal to 30% and less than or equal to 80% of the ground contact width D. A length of each of the shoulder regions 40 in the tire axial direction is greater than or equal to 5% and less than or equal to 30% of the ground contact width D.

The shoulder region 40 includes first shoulder blocks 41 and second shoulder blocks 42 which have a shape different from the first shoulder blocks 41, and shoulder lateral grooves 42 each of which forms a divide between the first shoulder block 41 and the second shoulder block 42. The first shoulder blocks 41 and the second shoulder blocks 42 are alternately arranged across shoulder lateral grooves 43 over the entire circumference of the pneumatic tire 1.

In this embodiment, an inner end, in the tire axial direction, of the first shoulder block 41 is located further inward in the tire axial direction than an inner end of the second shoulder block 42. The second shoulder block 42 is sized slightly larger than the first shoulder block 41. The first shoulder block 41 and the second shoulder block 42 are formed in a gently curved shape with a slope which is increasing toward the equator CL relative to the tire axial direction.

The shoulder lateral groove 43 is joined to the shoulder main groove 30 and extends therefrom toward the ground contact edge E. A groove width of the shoulder lateral groove 43 is preferably greater than or equal to 70% of the groove width of the shoulder main groove 30, and more preferably greater than or equal to 80% of the groove width of the shoulder main groove 30. When the shoulder lateral groove 43 is defined to have the groover width greater than or equal to 70% of that of the shoulder main groove 30, drainage performance can be improved. Further, the groove width of the shoulder lateral groove 43 is preferably less than or equal to 110% of the groove width of the shoulder main groove 30, and more preferably less than or equal to 100% of the groove width of the shoulder main groove 30. When the shoulder lateral groove 43 is defined to have the groove width less than or equal to 110% of that of the shoulder main groove 30, the volume of each block arranged in an outer part in the tire axial direction can be increased, which can in turn improve turning performance during driving. Therefore, the groove width of the shoulder lateral groove 43 is preferably greater than or equal to 70% and less than or equal to 110% of the groove width of the shoulder main groove 30, and more preferably greater than or equal to 80% and less than or equal to 100% of that of the shoulder main groove 30.

A depth of the shoulder lateral groove 43 is, for example, greater than or equal to 50% and less than or equal to 100% of the depth of the shoulder main groove 30. In addition, the shoulder lateral groove 43 may have a substantially uniform depth in a length direction of the shoulder lateral groove 43, or may have depths that vary in the length direction of the shoulder lateral groove 43. For example, the shoulder lateral groove 43 may have a region where the depth is decreased toward the outer end in the tire axial direction.

The center region 50 has center blocks 51 spaced from the shoulder main groove 30 and formed in a substantially polygonal shape, and also has first middle blocks 52 and second middle blocks 53 arranged around each of the center blocks 51. In this embodiment, one first middle block 52 is placed on each side of the center block 51 in the tire axial direction, and two second middle blocks 53 are placed on each side of the center block 51 in the tire circumferential direction. When a first block group is defined to include the center block 51 and the first middle blocks 52 placed on both sides of the center block 51 in the tire axial direction, and a second block group is defined to include the two second middle blocks 53, the first block group and the second block group are alternately arranged over the entire circumference of the pneumatic tire 1.

The center block 51 preferably has a substantially hexagonal shape. When the center block 51 is formed in the substantially hexagonal shape, a sufficient volume of the center block 51 can be easily secured to thereby improve block stiffness of the center block 51. As a result, wear and chipping of the center block 51 can be suppressed.

The center region 50 further includes annular grooves 54, each of which is defined to border the center block 51 and has a substantially hexagonal shape, center longitudinal grooves 55, each of which is designed to connect two annular grooves 54 adjacent to each other in the tire circumferential direction, and sets of two center lateral grooves 56 and 57 defined to connect the annular groove 54 and the shoulder main groove 30.

**In** this embodiment, the annular groove 54, the center longitudinal groove 55, and the center lateral grooves 56 and 57 have substantially the same groove width which is preferably greater than or equal to 70% of the groove width of the shoulder main groove 30, and more preferably greater than or equal to 80% of the groove width of the shoulder main groove 30. When the groove width of each of the grooves 54 to 57 is defined to be greater than or equal to 70% of that of the shoulder main groove 30, drainage performance can be improved. The upper limit of the groove width of the grooves 54 to 57 is 120% of the groove width of the shoulder main groove 30, for example. The groove width of the annular groove 54 may be slightly greater than the groove widths of the center longitudinal groove 55 and the center lateral grooves 56 and 57. The groove width of the center lateral grooves 56 and 57 may be slightly greater than the groove width of the center longitudinal groove 55.

Further, in this embodiment, the annular groove 54, the center longitudinal groove 55, and the center lateral grooves 56 and 57 have substantially the same depth. The depth of the grooves 54 to 57 is greater than or equal to 50% and less than or equal to 100% of the depth of the shoulder main groove 30.

The center longitudinal groove 55 forms a divide between adjacent second middle blocks 53 that are adjacent to each other in the tire axial direction. The center longitudinal groove 55 extends along a direction that is inclined relative to the tire circumferential direction. An inclination angle of the extending direction of the center longitudinal groove 55 is, for example, greater than or equal to 30° and less than or equal to 60° relative to the tire circumferential direction. Alternatively, the tire longitudinal groove 55 may extend along the tire circumferential direction.

The center lateral grooves 56 and 57 are inclined relative to the tire axial direction along opposite directions. In this way, foreign objects, such as soil, mud, and water, captured in the annular groove 54 are apt to efficiently exit the annular groove 54, which can lead to improvement in drainage performance and soil removing performance. The center lateral groove 57 is opposed to the shoulder lateral groove 43 across the shoulder main groove 30. This can easily allow the foreign objects, such as soil, mud, and water, to be effectively discharged through the shoulder lateral groove 43. As a result, drainage performance and soil removing performance can be further improved.

Here, in the top view of the tread 10, the area of the largest block having the maximum area among the blocks arranged in the center region 50 and the shoulder region 40 is less than or equal to 1.4 times of the area of the smallest block having the minimum area. As a result of an investigation, the present inventors found that when the area of the largest block is defined to be less than or equal to 1.4 times of the area of the smallest block, differences in block stiffness among the blocks can be reduced, and uneven wear and chipping during driving can be accordingly suppressed. Conversely, when the area of the largest block becomes greater than 1.4 times of the area of the smallest block, uneven wear and chipping tend to occur in the smallest block having a lower level of block stiffness. It should be noted that the above-described area of the block means an area of the block in the profile plane along the ground contacting surface of the tread 10.

The area of the largest block may be less than or equal to 1.4 times of the area of the smallest block, and is preferably less than or equal to 1.38 times of the area of the smallest block, and more preferably less than or equal to 1.36 times of the area of the smallest block. Uneven wear and chipping can be further suppressed during diving by minimizing a difference between the area of the largest block and the area of the smallest block. However, when the difference between the area of the largest block and the area of the smallest block is excessively minimized, turning performance during driving may be decreased. Therefore, the area of the largest block is preferably greater than or equal to 1.2 times of the area of the smallest block.

In this embodiment, the second shoulder blocks 42 have the maximum area, and the first middle blocks 52 have the minimum area. That is, the second shoulder blocks 42 correspond to the largest block, and the first middle blocks 52 correspond to the smallest block.

The largest block is preferably placed in the shoulder region 40. As described above, minimization of the difference between the area of the largest block and the area of the smallest block may deteriorate the turning performance during driving. With this in mind, the largest block is placed in the shoulder region 40 to increase stiffness of the blocks placed on the outer part in the tire axial direction. In this way, the turning performance can be improved. That is, when the largest block is designed to have the area less than or equal to 1.4 times of the area of the smallest block and placed in the shoulder region 40, uneven wear and chipping during driving can be suppressed while securing the turning performance.

An area of the center block 51 is preferably greater than or equal to 0.85 times of the area of the largest block, i.e., the second shoulder block 42, and more preferably greater than or equal to 0.90 times of the area of the largest block. Because of the placement at the center in the tire axial direction, the center block 51 is more likely to undergo uneven wear and chipping than other blocks. With this in mind, the center block 51 is designed to have the area greater than or equal to 0.85 times of the area of the second shoulder block 42, which can secure sufficient stiffness of the center block 51 and thus suppress uneven wear and chipping in the center block 51.

In addition, the area of the center block 51 is preferably less than or equal to 0.98 times of the area of the largest block, i.e., the second shoulder block 42, and more preferably less than or equal to 0.95 times of the area of the largest block. When the center block 51 is designed to have the area less than or equal to 0.98 times of the area of the second shoulder block 42, the volume of the blocks placed in the shoulder region 40 can be secured. This can ensure that uneven wear and chipping during driving is suppressed while maintaining appropriate turning performance. Accordingly, the area of the center block 51 is preferably greater than or equal to 0.85 times and less than or equal to 0.98 times of the area of the largest block, and more preferably greater than or equal to 0.90 times and less than or equal to 0.95 times of the area of the largest block.

In this embodiment, as described above, two types of blocks which differ in shape from each other are arranged in the shoulder region 40, and three types of blocks which differ in shape from each other are arranged in the center region 50. Therefore, the tread 10 as a whole includes five types of blocks having different shapes.

As shown in FIG. 2, the blocks arranged in the shoulder regions 40 and the center region 50 have neither sipes nor slits. In this case, block stiffness of each of the blocks arranged in the shoulder regions 40 and the center region 50 can be increased. As a result, uneven wear and chipping during driving can be suppressed. As used herein, a groove having a width greater than or equal to 1.5 mm is defined as a slit.

In addition, all of the blocks arranged in the shoulder regions 40 and the center region 50 have rounded corners. Here, a radius of curvature of each of the rounded corners is preferably greater than or equal to 1.0 mm, and more preferably greater than or equal to 1.5 mm. The rounded corners defined to have the radius of curvature greater than or equal to 1.0 mm can function to further suppress chipping during driving. Further, the radius of curvature of each of the curved corners is preferably less than or equal to 3.0 mm, and more preferably less than or equal to 2.5 mm. When the rounded corners are defined to have the radius of curvature less than or equal to 3.0 mm, the volume of each of the blocks can be secured. As a result, sufficient block stiffness can be obtained for each of the blocks. Therefore, the radius of curvature of the rounded corner is preferably greater than or equal to 1.0 mm and less than or equal to 3.0 mm, and more preferably greater than or equal to 1.5 mm and less than or equal to 2.5 mm.

As has been described above, when the area of the largest block, which has the maximum area among the blocks arranged in the shoulder region 40 and the center region 50, is defined to be less than or equal to 1.4 times of the area of the smallest block having the minimum area, the differences in block stiffness among the blocks can be minimized, and uneven wear and chipping during driving can be suppressed accordingly.

It should be noted that the above-described embodiment may be modified or changed as appropriate. In the above-described embodiment, for example, the tread 10 has the point symmetric pattern which is symmetric about an arbitrary point on the equator CL, although pattern arrangement in the tread 10 is not limited to the point symmetric pattern. For example, the tread 10 may have a line symmetric pattern which is line symmetric about the equator CL being the axis of symmetry. The tread 10 may have any pattern other than the point symmetric pattern or the line symmetric pattern.

### EXAMPLES

Hereinafter, experiment examples will be described, although the present invention is not limited to the described experiment examples.

### <Experiment Example 1>

An FEM model is created for a pneumatic tire T1 (tire size: 37X12.50R17LT; ground contact width D: 250 mm) having the tread pattern shown in FIG. 2, in which the pneumatic tire T1 is divided into finite elements. Then, the FEM model is used in a computer simulation to calculate a level of longitudinal stiffness of each of the blocks constituting a tread. It should be noted that the longitudinal stiffness means stiffness against a longitudinal load exerted from top to bottom on the tread. In the simulation, the level of the above-described stiffness is calculated in a state where the pneumatic tire 1 is mounted on a predetermined rim and filled with air to a predetermined internal pressure of 150 kPa.

### <Experiment Example 2>

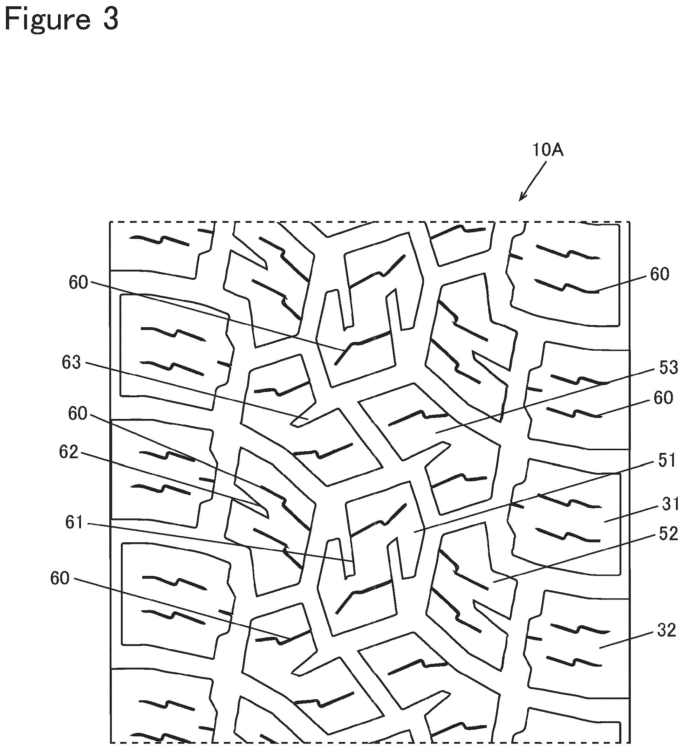

FIG. 3 shows a tread pattern of a pneumatic tire T2 in Experiment Example 2. The pneumatic tire T2 in Experiment Example 2 has the same structure as that in Experiment Example 1 except for the tread pattern. In FIG. 3, the same components as those of the above-described embodiment are designated by the same reference numerals.

As shown in FIG. 3, a tread 10A in Experiment Example 2 has a point symmetric pattern as in the case of the tread 10 in Experiment Example 1 (see FIG. 2), and includes center blocks 51, first middle blocks 52, second middle blocks 53, first shoulder blocks 41, and second shoulder blocks 42. The tread 10A in Experiment Example 2 has sipes 60 in each of the blocks, which differs from the tread 10 in Experiment Example 1. Further, the tread 10A in Experiment Example 2 has slits 61, 62, and 63 defined in the center blocks 51, the first middle blocks 52, and the second middle blocks 53, the slits 62, 62, and 63 being terminated in those respective blocks, which differs from the tread 10 in Experiment Example 1.

An area of each of the blocks contained in the treads of Experiment Examples 1 and 2 in a top view is shown in Table 1. Table 1 also indicates a ratio (Smax / Smin) of an area of the largest block to an area of the smallest block, and a ratio (Scen / Smax) of an area of the center block to the area of the largest block.

**[Table 1]**

| Item | Experiment Example (T1) | Experiment Example (T2) |
|---|---|---|
| Ares of first shoulder block | 1906 mm² | 2078 mm² |
| Area of second shoulder block | 2113 mm² | 2300 mm² |
| Area of center block | 1980 mm² | 1926 mm² |
| Area of first middle block | 1569 mm² | 1561 mm² |
| Area of second middle block | 1741 mm² | 1738 mm² |
| Smax / Smin | 1.35 | 1.47 |
| Scen / Smax | 0.94 | 0.84 |

As shown in Table 1, in the pneumatic tire T1 of Experiment Example 1, the ratio (Smax / Smin) of the area of the largest block to the area of the smallest block is less than or equal to 1.4, while in the pneumatic tire T2 of Experiment Example 2, the ratio (Smax / Smin) of the area of the largest block to the area of the smallest block is greater than 1.4.

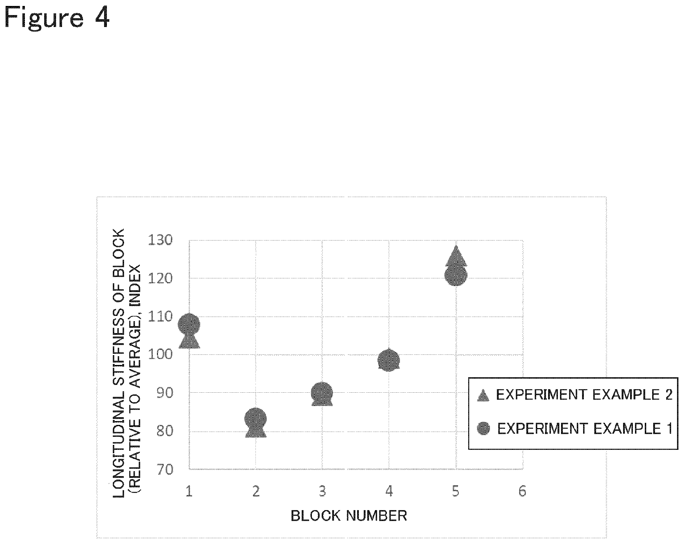

Next, referring to FIG. 4, values of longitudinal stiffness of the blocks calculated through the simulation are shown. In FIG. 4, the center block 51 is indicated as block number 1, the first middle block 52 as block number 2, the second middle block 53 as block number 3, the first shoulder block 41 as block number 4, and the second shoulder block 42 as block number 5. Further, in FIG. 4, the values are indicated taking an average of the values of longitudinal stiffness of the blocks in the experiment examples as 100. The result of study by the inventors reveals that the pneumatic tire highly resistant to uneven wear and chipping during driving is a pneumatic tire in which a variation in the values of longitudinal stiffness of the blocks is small, i.e., the difference between the maximum value and the minimum value of longitudinal stiffness is small.

As shown in FIG. 4, in the pneumatic tire T1 of Experiment Example 1, the values of longitudinal stiffness of the blocks vary within a range of ±20% of the average. On the other hand, in the pneumatic tire T2 of Experiment Example 2, the values of longitudinal stiffness of the blocks vary in a range of approximately ±25% of the average. From this, it can be said that the difference in block stiffness among the blocks can be minimized by designing the blocks such that the ratio (Smax / Smin) of the area of the largest block to the area of the smallest block is less than or equal to 1.4. In other words, when the blocks are formed with the ratio (Smax / Smin) of the area of the largest block to the area of the smallest block of less than or equal to 1.4, uneven wear and chipping during driving can be suppressed.

### REFERENCE SIGNS LIST

1 pneumatic tire; 10 tread; 11 side wall; 12 bead; 13 carcass; 13A, 13B, 13C carcass ply; 14 bead core; 15 bead filler; 16 belt layer; 16A, 16B belt ply; 17 belt reinforcement layer; 17A, 17B belt reinforcement ply; 30 shoulder main groove; 40 shoulder region; 41 first shoulder block; 42 second shoulder block; 43 shoulder lateral groove; 50 center region; 51 center block; 52 first middle block; 53 second middle block; 54 annular groove; 55 center longitudinal groove; 56, 57 center lateral groove.

## Claims

1. A pneumatic tire (1) with a tread (10), wherein the tread (10) comprises:
a pair of shoulder regions (40), each shoulder region (40) being disposed on an outer side, in a tire axial direction, of a corresponding one of a pair of shoulder main grooves (30) continuously extending in a tire circumferential direction, and being delimited by a corresponding one of a pair of ground contact edges; and
a center region (50) disposed between the pair of shoulder regions;
wherein a plurality of blocks are arranged in the center region (50) and the shoulder regions (40); and
in a plan view of the tread (10), an area of a largest block having a maximum area among the blocks arranged in the center region (50) and the shoulder regions (40) is less than or equal to 1.4 times of an area of a smallest block having a minimum area, and
wherein the center region (50) comprises:
a center block (51) formed in a substantially polygonal shape and arranged at a distance from the shoulder main groove (30);
a middle block (52,53) arranged around the center block (51);
an annular groove (54) formed in a substantially polygonal shape and defined to border the center block (51);
a center longitudinal groove (55) defined to connect annular grooves (54) which are adjacent to each other in the tire circumferential direction; and
a plurality of center lateral grooves (56,57) defined to connect the annular grooves (54) to the shoulder main groove (30),
**characterized in that**
among the plurality of center lateral grooves (56,57), center lateral grooves (56,57) adjacent to each other in the tire circumferential direction are inclined relative to the tire axial direction along opposite directions.

2. The pneumatic tire (1) according to claim 1, wherein the center block (51) has a substantially hexagonal shape.

3. The pneumatic tire (1) according to claim 1, wherein none of the blocks arranged in the center region (50) and the shoulder regions (40) has a sipe or a slit.

4. The pneumatic tire (1) according to claim 1 or 2, wherein the largest block is arranged in the shoulder region (40).

5. The pneumatic tire (1) according to claim 1, wherein an area of the center block (51) is greater than or equal to 0.85 times of the area of the largest block.

6. The pneumatic tire (1) according to claim 1, wherein the annular groove (54) has a groove width greater than or equal to 80% of a groove width of the shoulder main groove (30).

7. The pneumatic tire according to any one of claims 1 to 6,
wherein all of the blocks arranged in the center region (50) and the shoulder regions (40) have rounded corners; and
wherein a radius of curvature of each of the rounded corners is greater than or equal to 1.0 mm and less than or equal to 3.0 mm.

8. The pneumatic tire (1) according to claim 1, wherein the area of the center block (51) is greater than or equal to 0.90 times and less than or equal to 0.95 times of the area of the largest block.

9. The pneumatic tire (1) according to claim 1, wherein the middle block (52,53) comprises a first middle block (52) arranged on each side of the center block (51) in the tire axial direction and a second middle block (53) arranged on each side of the center block (51) in the tire circumferential direction.

## Patentansprüche

1. Ein Luftreifen (1) mit einer Lauffläche (10), wobei die Lauffläche (10) Folgendes umfasst:
ein Paar Schulterbereiche (40), wobei jeder Schulterbereich (40) auf einer Außenseite - in Reifenaxialrichtung - einer entsprechenden Nut von einem sich in Reifenumfangsrichtung kontinuierlich erstreckenden Schulterhauptnutpaares (30) angeordnet ist und durch eine entsprechende Kante von einem Paar von Bodenkontaktkanten begrenzt wird; und
einen Mittelbereich (50), der zwischen dem Paar von Schulterbereichen angeordnet ist;
wobei eine Vielzahl von Blöcken im Mittelbereich (50) und in den Schulterbereichen (40) angeordnet ist; und wobei
in einer Draufsicht auf die Lauffläche (10), ein Flächeninhalt eines größten Blocks, der den größten Flächeninhalt unter dem Mittelbereich (50) und den Schulterbereichen (40) angeordneten Blöcken aufweist, kleiner oder gleich dem 1,4-fachen des Flächeninhalts eines kleinsten Blocks ist, der den kleinsten Flächeninhalt aufweist, und
wobei der Mittelbereich (50) Folgendes umfasst:
einen Mittelblock (*center block*) (51), der im Wesentlichen polygonal geformt und in einem Abstand von der Schulterhauptnut (30) angeordnet ist;
einen Zwischenblock (*middle block*) (52, 53), der um den Mittelblock (51) herum angeordnet ist;
eine Ringnut (54), die im Wesentlichen polygonal geformt ist und dazu definiert ist, den Mittelblock (51) zu begrenzen;
eine mittlere Längsnut (55), die dazu definiert ist, die Ringnuten (54) zu verbinden, die in Reifenumfangsrichtung benachbart sind; und
eine Vielzahl von mittleren Quernuten (56, 57), die dazu definiert sind, die Ringnuten (54) mit der Schulterhauptnut (30) zu verbinden,
**dadurch gekennzeichnet, dass**
unter der Vielzahl von mittleren Quernuten (56, 57), in Reifenumfangsrichtung benachbarte mittlere Quernuten (56, 57) relativ zur Reifenaxialrichtung entlang entgegengesetzter Richtungen geneigt sind.

2. Der Luftreifen (1) nach Anspruch 1, wobei der Mittelblock (51) eine im Wesentlichen hexagonale Form aufweist.

3. Der Luftreifen (1) nach Anspruch 1, wobei keiner der im Mittelbereich (50) und in den Schulterbereichen (40) angeordneten Blöcke eine Lamelle oder einen Schlitz aufweist.

4. Der Luftreifen (1) nach Anspruch 1 oder 2, wobei der größte Block im Schulterbereich (40) angeordnet ist.

5. Der Luftreifen (1) nach Anspruch 1, wobei ein Flächeninhalt des Mittelblocks (51) größer oder gleich dem 0,85-fachen des Flächeninhalts des größten Blocks ist.

6. Der Luftreifen (1) nach Anspruch 1, wobei die Ringnut (54) eine Nutenbreite aufweist, die größer oder gleich 80 % einer Nutenbreite der Schulterhauptnut (30) ist.

7. Der Luftreifen nach irgendeinem der Ansprüche von 1 bis 6,
wobei alle im Mittelbereich (50) und in den Schulterbereichen (40) angeordneten Blöcke abgerundete Ecken aufweisen; und
wobei ein Krümmungsradius jeder der abgerundeten Ecken größer oder gleich 1,0 mm und kleiner oder gleich 3,0 mm ist.

8. Der Luftreifen (1) nach Anspruch 1, wobei der Flächeninhalt des Mittelblocks (51) größer oder gleich dem 0,90-fachen und kleiner oder gleich dem 0,95-fachen des Flächeninhalts des größten Blocks ist.

9. Der Luftreifen (1) nach Anspruch 1, wobei der Zwischenblock (52, 53) einen ersten Zwischenblock (52), der in Reifenaxialrichtung auf jeder Seite des Mittelblocks (51) angeordnet ist, sowie einen zweiten Zwischenblock (53) umfasst, der in Reifenumfangsrichtung auf jeder Seite des Mittelblocks (51) angeordnet ist.

## Revendications

1. Un pneu pneumatique (1) comportant une bande de roulement (10), sachant que la bande de roulement (10) comprend :
une paire de régions d'épaule (40), chaque région d'épaule (40) étant disposée sur un côté extérieur, dans la direction axiale du pneu, d'une rainure principale d'épaule correspondante parmi une paire de rainures principales d'épaule (30) s'étendant de manière continue dans la direction circonférentielle du pneu, et étant délimitée par une arête de contact avec le sol correspondant parmi une paire d'arêtes de contact avec le sol ; et
une région centrale (50) disposée entre la paire de régions d'épaule ;
sachant que la pluralité de blocs est agencée dans la région centrale (50) et dans les régions d'épaule (40) ; et
dans une vue en plan de la bande de roulement (10), une aire de surface d'un bloc le plus grand, présentant une aire de surface maximale parmi les blocs agencés dans la région centrale (50) et les régions d'épaule (40), est inférieure ou égale à 1,4 fois l'aire d'un bloc le plus petit, présentant une surface minimale, et
sachant que la région centrale (50) comprend :
un bloc central (51) formé selon une forme sensiblement polygonale et agencé à distance de la rainure principale d'épaule (30) ;
un bloc intermédiaire (52, 53) agencé autour du bloc central (51) ;
une rainure annulaire (54) formée selon une forme sensiblement polygonale et définie de manière à délimiter le bloc central (51) ;
une rainure longitudinale centrale (55) définie pour relier des rainures annulaires (54) adjacentes les unes aux autres dans la direction circonférentielle du pneu ; et
une pluralité de rainures latérales centrales (56, 57) définies pour relier les rainures annulaires (54) à la rainure principale d'épaule (30),
**caractérisé en ce que,**
parmi la pluralité de rainures latérales centrales (56, 57), les rainures latérales centrales (56, 57) adjacentes les unes aux autres dans la direction circonférentielle du pneu sont inclinées par rapport à la direction axiale du pneu selon des directions opposées.

2. Le pneu pneumatique (1) d'après la revendication 1, sachant que le bloc central (51) présente une forme sensiblement hexagonale.

3. Le pneu pneumatique (1) d'après la revendication 1, sachant que aucun des blocs disposés dans la région centrale (50) et dans les régions d'épaule (40) ne présente de lamelle ou de fente.

4. Le pneu pneumatique (1) d'après la revendication 1 ou 2, sachant que le bloc le plus grand est disposé dans la région d'épaule (40).

5. Le pneu pneumatique (1) d'après la revendication 1, sachant que une aire de surface du bloc central (51) est supérieure ou égale à 0,85 fois l'aire du bloc le plus grand.

6. Le pneu pneumatique (1) d'après la revendication 1, sachant que la rainure annulaire (54) présente une largeur de rainure supérieure ou égale à 80 % de la largeur de rainure de la rainure principale d'épaule (30).

7. Le pneu pneumatique d'après l'une quelconque des revendications de 1 à 6,
sachant que tous les blocs agencés dans la région centrale (50) et dans les régions d'épaule (40) présentent des angles arrondis ;
sachant que le rayon de courbure de chacun des coins arrondis est supérieur ou égal à 1,0 mm et inférieur ou égal à 3,0 mm.

8. Le pneu pneumatique (1) d'après la revendication 1, sachant que l'aire du bloc central (51) est supérieure ou égale à 0,90 fois et inférieure ou égale à 0,95 fois l'aire du bloc le plus grand.

9. Le pneu pneumatique (1) d'après la revendication 1, sachant que le bloc intermédiaire (52, 53) comprend un premier bloc intermédiaire (52) agencé de chaque côté du bloc central (51) dans la direction axiale du pneu, ainsi qu'un deuxième bloc intermédiaire (53) agencé de chaque côté du bloc central (51) dans la direction circonférentielle du pneu.
